# EUROPEAN PATENT APPLICATION

(11) **EP 3 243 626 A1**
(43) Date of publication of application: **15.11.2017**
(21) Application number: 17170352.3
(22) Date of filing: 10.05.2017
(51) Int. Cl.: B29C 44/58, B29C 44/42, B29C 33/72, B29C 45/17, B29C 45/04, B29C 70/66, B29C 45/27, B29K 105/04, B29K 105/00

(54) **HOT-MOLDING METHOD**

(30) Priority: 12.05.2016 IT UA20163390
(71) Applicant: Tryonic Ltd, London, Greater London (GB)
(72) Inventor: Paronetto, Giuseppe, london, Greater London (GB); Del Guasta, Andrea, london, Greater London (GB)
(74) Representative: Citron, Massimiliano

(57) **Abstract**

A method for hot-molding a compound comprising or consisting of thermoplastic material and expanding microspheres is described. To avoid the problem of the fast solidification, with the steps of:
(i) hot-injecting the compound into an inlet (70) of a mold comprising a mold cavity (64) and a plurality of internal channels (66) which from the inlet (70) open into different points of the cavity (48);
(ii) detaching from the mold a mold portion (64) to create an access to at least one of the internal channels which has been obstructed by the compound;
(iii) removing obstructing material from the at least one internal channel to restore the flow of injected compound.

## Description

The invention relates to a hot-molding method for a compound comprising or consisting of thermoplastic material and expanding microspheres. In particular, the method is convenient for molding pads, or generally lightening panels or bearings or structures for absorbing shocks. Particularly advantageous is the method when molding pads for helmets. The invention also refers to a mold for performing the method.

To lighten the final product or better copy the mold cavity using an expansion during molding, plastic microspheres containing gas are often mixed to a thermoplastic material. A material composed of the two components is then injected into a mold.

At the time of injection, the microspheres expand rapidly in the hot and fluid thermoplastic material, and some microsphere breaks releasing the gas. The combined effect of the two phenomena is a sudden cooling of the compound, which, from when it leaves the injector's nozzle, succeeds to run only a little way inside the mold. Then, if the piece to be molded has substantial dimensions (e.g. one dimension is greater than or equal to 50 cm) and/or the mold cavity has labyrinths or sub-channels, the compound can not be used.

This technological limitation is undoubtedly disadvantageous given the unquestionable qualities of the compound and objects molded with it (especially helmets' padding), such as a homogeneous density, good copying of the mold cavity and consequent fidelity to geometries to be molded, and the uniformity of the mechanical performance that the piece has to exhibit at every point thereof.

The main object of the invention is mitigating or solving the above-mentioned problems.

In particular, the object of the invention is to allow the use of said compound material for molding larger objects, for which a larger mold cavity is required.

A first aspect of the invention is a method for hot-molding a compound comprising or consisting of thermoplastic material and expanding microspheres, with the steps of:
(i) hot-injecting the compound into an inlet of a mold comprising a mold cavity and a plurality of internal channels which from the inlet open into different points of the cavity;
(ii) detaching from the mold a mold portion to create an access to at least one of the internal channels which has been obstructed by the compound;
(iii) removing obstructing material from the at least one internal channel to restore the flow of injected compound.

The method allows the compound to fill mold cavities of unreachable dimensions by injecting into the cavity from a single channel, and with step (ii) and (iii) the problem of cooling and very fast solidification of the compound along too long channels (> = 5-10 cm) is solved.

In a preferred embodiment, steps (ii) and (iii) are particularized with the steps of:
- detaching from the mold a mold portion in which there are channels obstructed by the compound;
- reattaching to the mold a mold portion in which there are channels free from compound.

In other words, this variant solves the problem of fast solidification by replacing a mold portion with occluded channels with a mold portion with clear channels.

Note that the channels preferably have constant cross-section, or are formed by segments with almost constant cross-section, all the way from the inlet to the outlet points to the cavity. The channels are therefore devoid of tanks for local compound accumulation as in the known hot runners, which allow the indefinite stay of the compound to be molded in a heated chamber to avoid sprues. Instead the method removes sprues after each molding with steps (ii) and (iii).

For each cycle of molding, the steps (i) to (iii) are repeated cyclically; and phase (i) may comprise injections at various inputs, not necessarily just one.

According to a preferred variant, during the only one or a or each injection in step (i), the degree of expansion of the compound just injected is adjusted into said input by adjusting the injection speed of the compound. So, one can get a more or less expanded compound at the injection point.

According to another preferred variant, variations are applied to the speed by which the material is injected at the inlet thereby changing each time the density of the compound. It is therefore possible to inject into the mold cavity a sequence of materials with different densities and mechanical characteristics.

Steps (ii) and (iii) can be accomplished in several convenient ways.

For example, one can decompose the mold to uncover clogged channels, to then remove residual compound from such channels. This envisages a simple structure for the mold because it is sufficient to open it and clean it upon every molding operation without complicated movements.

Alternatively or additionally, the detached mold portion has obstructed channels inside it and is replaced by a portion with clear channels. This is advantageous in case of multiple injections. In fact, not necessarily the steps (i) to (iii) involve total filling of the mold cavity. In case two or more compounds are injected sequentially into the same cavity (e.g. of different colors or materials), steps (ii) and (iii) can be carried out with the steps of
- re-composing the mold with a portion or piece comprising channels clear from compound,
- injecting the compound again into an inlet of the mold.

For the above-mentioned compound, the method preferably provides for
- heating the compound by bringing it to a temperature of 110-180 °C at the injection nozzle; and/or
- waiting for the compound to expand and executing step (i) in about 1 minute or less (in fact, said compound resists a few minutes after its creation, then degenerates rapidly); and/or
- heating the plurality of channels to a temperature of 110-180 °C while the mold cavity is at a temperature below 90 °C to allow the hardening and stabilization of the compound.

Preferably said mold inlet is only one.

A second aspect of the invention is a mold comprising:
a first portion comprising a mold cavity with a plurality of inlets;
a second portion comprising a plurality of channels, each channel putting into communication an injection inlet of the mold and one of said inlets of the cavity;
wherein the first and the second portion can be leant against one another to form an overall mold.

Preferably, the second portion is formed by the assembly of two parts which are splittable to give access to at least one of said channels, preferably all.

Preferably, the first and second portions and/or the two parts:
- are metal plates or blocks; and/or
- they can be coupled together along a contact, e.g. flat, surface; and/or
- comprise heating means for heating their volume.

The said thermoplastic material may, for example, comprise or consist of: rubber, an elastomer, PVC, TPU, polyurethane, or polyethylene.

Said expanding microspheres constitute e.g. 1% to 10% (measured by weight) of the thermoplastic material, and preferably they are non-expanded particles, the particles being made of plastic material, of closed shape, hollow and filled with gas. The particles have generally spherical shape and are very small (10-40 µm in diameter). Note, however, that the size is not essential.

A composition by weight with good characteristics in the final molded material is with density between 20 and 900 gr/lt.

To further illustrate the advantages of the invention, a preferred embodiment will now be described with reference to the accompanying drawings, wherein
fig. 1 shows a schematic sectional view of a mold;
fig. 2 shows the mold of fig. 1 in different configurations;
fig. 3 shows a variant of mold.

In the figures, the same numbers indicate equal parts. To not crowd the drawings, sometimes not all the same elements are numbered.

A molding apparatus MC comprises a known injector 10 and a mold 30. The injector 10 comprises a loading hopper 12, a mixing chamber 14, an injection screw 16 and a displaceable injection piston 18. The hopper 12 contains the two elements to be mixed in the chamber 14, which is heated to facilitate homogenization and fluidification of the compound.

The mold 30 comprises a first heated block 40 and a second heated block 60.

The first block 40 is heated to about 70-90 °C by means of resistors (not shown) and is formed by two plates 42, 44 which delimit a cavity 46 when coupled. One of the two plates, e.g. the plate 44, comprises inlets 48 toward the cavity 46.

The second block 60 is heated to about 160-180 °C by means of resistors (not shown) and is formed by two plates 62, 64 which, when coupled, define a plurality of channels 66 converging towards a manifold channel 68 which connects them with an input 70 connectable to a nozzle 20 of the injector 10.

The second block 60 is abutted against the plate 44 so that the channels 66 collimate with the inlets 48.

In order to thermally insulate the molds 40, 60, cavities 72 may be obtained on the respective contact surfaces and/or insulating layers, such as bakelite, can be interposes therebetween.

### MOLDING

When a piece is to be molded, the injector 10 through the piston 16 injects into the input 70 an amount of compound. The compound runs the manifold 68 and the channels 66 to invade the cavity 46 by entering through the various inlets 48.

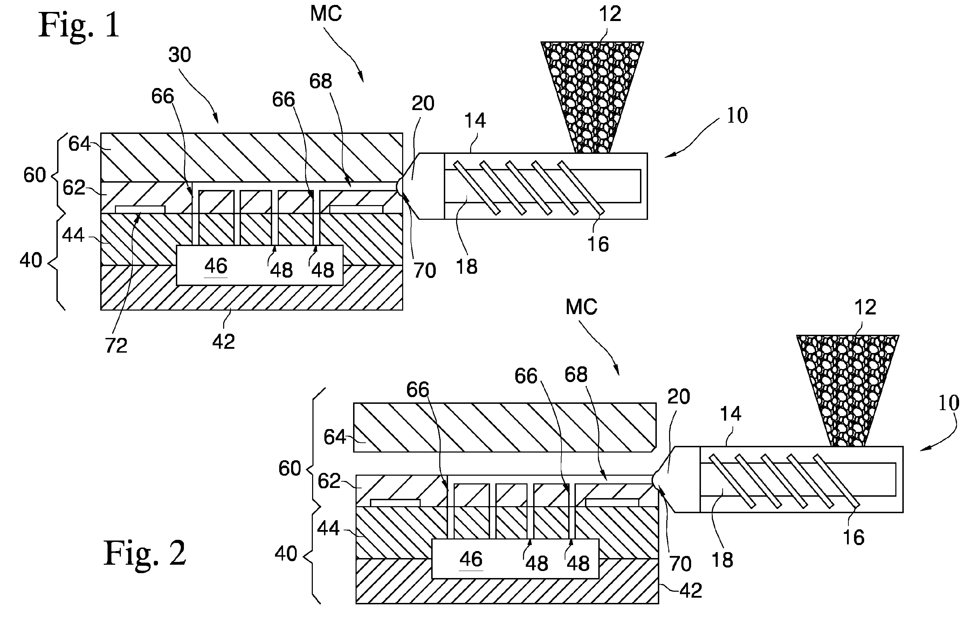

After the injection, given the nature of the compound in the channels 66 and in the manifold 68, inevitably there has remained solidified compound that obstructs them. Then the plate 64 is disconnected from the plate 62 (Figure 2) to create access to the channels 66, which are cleaned by manually removing the compound residues or by using appropriate ad-hoc tools to push the material outside the injection holes. After the cleaning, the plate 64 is reassembled on the plate 62 and the molding cycle starts again.

To improve the overall cleaning of the injection paths, one can optionally:
- remove also the plate 62 from the block 44 or open it by means of hinges to better clean the inlets 48; and/or
- remove also the block 44 from block 42 in order to better clean the inlets 48.

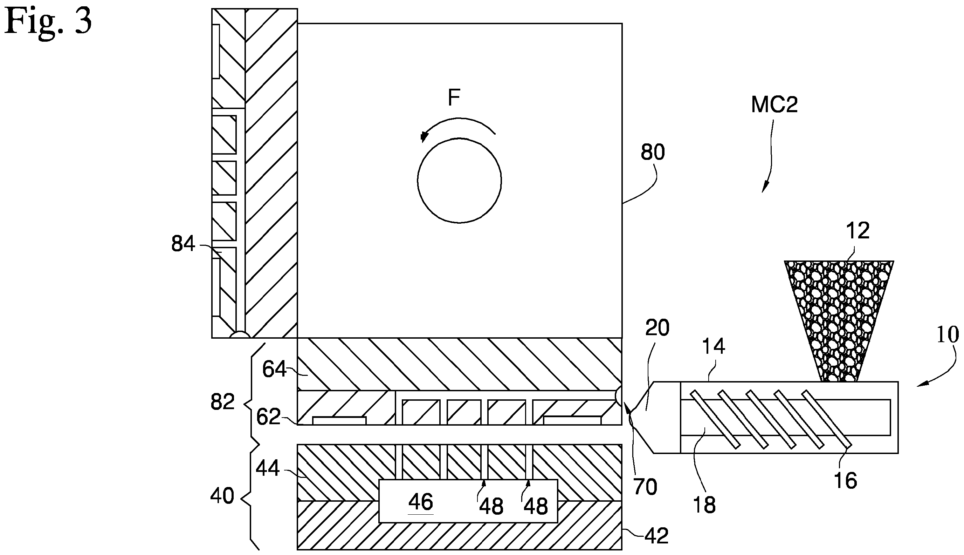

Fig. 3 shows a variant MC2 of the molding apparatus MC in the examplary case of double injecting of compound. Here the mold 60 is no longer unique but is replaced by various molds 82, 84 forming part of a movable tower 80.

The molds 82, 84 each have the function and the overall internal structure of the mold 60, and are sequentially couplable to the mold 40 by the movement of the turret 80 (see arrow F).

### MOLDING

When one wants to mold a piece, the mold 82 is put side by side with the mold 40, and the first injection proceeds as in the previous case.

After the first injection is completed, by moving the turret 80 the mold 82 is detached from the mold 40 and the plate 44 is replaced with another, to change the cavity 46.

Then the mold 84 is attached to the mold 40 so reconstituted, and a second injection starts to complete the piece.

The cleaning of the removed plate 44 and/or of the mold 82 can advantageously take place during the second injection.

The number of injections and/or molds connected to the turret 80 can obviously vary.

## Claims

1. Method for hot-moulding a compound comprising or consisting of thermoplastic material and expanding microspheres, with the steps of:
(i) hot-injecting the compound into an inlet (70) of a mold comprising a mold cavity (46) and a plurality of internal channels (66) which from the inlet (70) open into different points of the cavity (48);
(ii) detaching from the mold a mold portion (64) to create an access to at least one of the internal channels which has been obstructed by the compound;
(iii) removing obstructing material from the at least one internal channel to restore the flow of injected compound.

2. Method according to claim 1, wherein, during an injection in step (i), the expansion degree of the compound just injected at said inlet is adjusted by adjusting the injection speed of the compound.

3. Method according to any one of the preceding claims, wherein in steps (ii) and (iii) the mold is decomposed to uncover clogged channels (66), for then removing residual compound from such channels.

4. Method according to any one of the preceding claims, wherein the detached portion of the mold has inside, or comprises, clogged channels and is replaced with a portion with clear channels.

5. Method according to any one of the preceding claims, wherein
- the compound is heated to a temperature of 110-180 ° C at the injection nozzle;
- the compound is waited to expand and
- step (i) is performed in about 1 minute or less.

6. Method according to any one of the preceding claims, wherein
- the plurality of channels is heated to a temperature of 110-180 ° C while the mold cavity is at a temperature below 90 °C.

7. Mold (30) comprising:
a first portion (40) comprising a mold cavity (46) with a plurality of inlets (48);
a second portion (60) comprising a plurality of channels (66), each channel putting into communication an injection inlet of the mold and one of said inlets of the cavity;
wherein the first and the second portion can be leant against one another to form an overall mold.

8. Mold according to claim 7, wherein the second portion is formed by the assembly of two parts (42, 44) which are splittable to give access to at least one of said channels, preferably all.

9. Mold according to claim 7 or 8, wherein the first and the second portion and/or the two said parts are metal plates or metal blocks.

10. Mold according to claim 7 or 8 or 9, wherein the first and the second portion and/or the two said parts are couplable together along a flat contact surface.
